# EUROPEAN PATENT APPLICATION

(11) **EP 4 765 758 A1**
(43) Date of publication of application: **24.06.2026**
(21) Application number: 24220534.2
(22) Date of filing: 17.12.2024
(51) Int. Cl.: H04L 45/12, H04L 45/302

(54) **METHODS, APPARATUSES, AND COMPUTER PROGRAMS FOR DETERMINING A ROUTE FOR A DATA PACKET**

(71) Applicant: Deutsche Telekom AG, 53113 Bonn (DE)
(72) Inventor: FRISCH, Andreas, 53757 Sankt Augustin (DE); BREITBACH, Johannes Markus, 53227 Bonn (DE)
(74) Representative: 2SPL Patentanwälte PartG mbB

(57) **Abstract**

Examples of the present disclosure relate to methods, apparatuses, and computer programs for route control and for determining a route for a data packet to be transmitted in a communication network. The method (10) for route control and for determining a route for a data packet to be transmitted from a first node to a second node in a communication network comprises obtaining (11) a first network address for the first node and a second network address for the second node and obtaining (12) transmission requirements for the data packet. The method (10) further comprise determining (13) the route from the first node to the second node via a plurality of intermediate nodes based on the transmission requirements.

## Description

### Field

Examples of the present disclosure relate to methods, apparatuses, and computer programs for route control and for determining a route for a data packet to be transmitted in a communication network, more particularly, but not exclusively, to a concept for determining an end-to-end route through a communication network based on multiple criteria and controlled by a central node

### Background

Terrestrial and non-terrestrial communication networks (TN, NTN) represent two distinct yet complementary systems that facilitate global connectivity. Terrestrial networks rely on ground-based infrastructure, including fiber-optic cables, cellular towers, and microwave links, to transmit data over land, offering high-speed and reliable communication in densely populated or accessible areas. Non-terrestrial networks, on the other hand, encompass space-based systems like satellites, as well as airborne platforms such as drones and high-altitude balloons, to provide coverage in remote, rural, or underserved regions where terrestrial infrastructure is challenging or impractical to deploy. These networks enable seamless communication for applications such as global internet coverage, navigation, disaster response, and military operations. By integrating terrestrial and non-terrestrial systems, hybrid solutions can bridge connectivity gaps, enhance redundancy, and improve the resilience of communication networks in diverse and evolving environments.

With new satellite systems currently in deployment a wider range of satellite use cases comes up even for the area of private consumers, satellite connectivity for moving objects such as cars, trains etc. Satellite systems may contemplate to terrestrial mobile networks in a number of scenarios and purposes, such as:
- Continuous coverage: Although terrestrial networks provide a very high level of area coverage there still are some coverage gaps. In these occasions/locations a satellite network can offer an alternative and ensures continuous coverage.
- Redundancy: Close to the previous scenario, if - for whatever reason - a terrestrial network is not available anymore the satellite connectivity takes over to ensure connectivity.
- Capacity boost: In specific situations the need of a special user/user group might be higher than current terrestrial mobile network can deliver. In those cases, the additional satellite link can provide additional capacity.

On top so-called Low-Altitude and High-Altitude Platforms, in fact flying base stations in lower altitude up to stratosphere deployments are developed or even available to provide coverage. The purpose and advantages are similar to those mentioned before for satellite systems but with an alternative aviation approach.

In combination this provides usually more than one option for choosing a Radio Access Network (RAN) and even the backhaul and transport network for a dedicated transmission from a terminal device to another point in the network (e.g. a server) or another terminal device. Given a number of options for the transmission and the routing between the end-points means as well to have the necessity to make a proper decision for that routing while a number of criteria could apply to make the choice.

### Summary

It is a finding that routing criteria may reach beyond the NTN-topic and could apply in general for any routing in IP-networks. So far there are mainly technical criteria and they are applied to make a choice if multiple options for choosing an access network or for routing in the transport network. The routing might follow
a) a general allowance to choose a network (type),
b) the actual load in the network (load-balancing), and/or
c) the capability to provide a requested Quality of Service (QoS, e.g. Latency).

However, in principle for worldwide network set-up with multiple options for access via terrestrial, aerial and satellite systems and transport in IP networks this might not be sufficient or at least not optimal to provide the best option. Other criteria may have to be involved to complete the decision for an optimal routing including:
- Regulatory aspects,
- Energy efficiency, and/or
- Security aspects

To give a tangible example in context of NTN: Given a worldwide operating company with locations even in countries not fully compliant to western democratic standards wants to connect its locations. There might be risks using the local fixed or mobile network since this could be cut by the local government/network operator or used to intercept company internal information. For that reason, critical information should only be sent/delivered via a satellite connection while less sensible information can still be handled via the local network with interconnection to other countries. There could be even governmental recommendations or restrictions in the home-country of this company to run operations in that kind of countries only if local networks are avoided for sensible information. Another use case could be in the area of sustainability with checking for a specific connection-/transmission-request the best solution with a) providing the requested service with b) the lowest level of energy usage and CO2 production.

An example relates to a method for route control and for determining a route for a data packet to be transmitted from a first node to a second node in a communication network. The method comprises obtaining a first network address for the first node and a second network address for the second node and obtaining information about transmission requirements for the data packet. The method also comprises determining the route from the first node to the second node via a plurality of intermediate nodes based on the transmission requirements. Examples may enable end-to-end routing based on transmission requirements.

In further examples the method may further comprise receiving a routing request from the first network node and/or obtaining the transmission requirements from a user. That way examples may enable the first network node to initiate route determination by issuing an according request and optionally to even provide user specific transmission requirements. For example, the transmission requirements comprise one or more elements of the group of Quality-of-Service (QoS) requirements, energy consumption requirements, one or more weights for weighting one or more predefined transmission requirements, and security requirements. Examples may hence consider transmission requirements, which are not directly related to the topology or load in the communication network, and which may even be user specific or based on user preferences. The method may further comprise providing information about the route to the first network node. The method for determining the route may hence be executed somewhere in a communication network, in particular at a network node, which is not the transmitter or receiver of the data packet. Then a communication sequence between the transmitter and the route determining node may take place in terms of a request and a response. In some examples the route determining node may be the transmitter or the receiver of the data packet.

In further examples the method may comprise monitoring a network topology and/or load situation of one or more communication systems. The route determining node may hence have a current view on the network and may therewith be enabled to consider topology changes (nodes in failure or error, new nodes) and/or load changes (processing and communication/link capacities) when determining the route in addition to the transmission requirements. Moreover, the method may comprise using a machine learning model for determining the route. Thereby, a machine learning model may be trained to determine a route based on different transmission requirements or combinations of transmission requirements. For example, the method may be configured at an application server.

Examples further provide a method for a first network node to determine a route for a data packet to be transmitted from the first node to a second node in a communication network. The method comprises providing a request for determining the route to a route control node in the communication network and receiving information about the route for the data packet from the route control node. That way an efficient mechanism for central route provision/determination in a communication network can be enabled. In further examples, the method may comprise providing information about transmission requirements for the data packet to the route control node. The transmission requirements may be determined at the requesting route, e.g. based on a user input or based on settings at the network node.

The method may further comprise indicating the route in the data packet. Nodes along the route can then determine the route from the data packet directly. For example, the method comprises inserting information about at least a subsection of the route into a protocol header of the data packet. Using a protocol header may efficiently allow the nodes along the route processing and forwarding the data packet. The indicating may comprise a positive list of one or more network nodes, e.g. segments of a network, to use for a transmission path and/or a negative list of one or more network nodes, e.g. segments of a network, to avoid for the transmission path/route, thereby efficiently indicating route options in the data packet. For example, all network nodes of a certain network, subnetwork, or country may be excluded.

For example, the first node is a user device, and the method further comprises obtaining information about transmission requirements from a user and applying the information about the transmission requirements to the route of the data packet (which may be at the user device, a central network node or at an application server). The information about the transmission requirements may comprise one or more weights for weighting one or more predefined transmission requirements. Therewith an efficient and individual combination of different transmission requirements can be enabled.

Examples further provide a method for route control at an intermediate node and for determining a route for a data packet to be transmitted from a first node to a second node in a communication network. The method comprises obtaining information about transmission requirements for the data packet and receiving the data packet from a previous node. The method further comprises selecting a subsequent node based on the transmission requirements and forwarding the data packet to the subsequent node. Examples may enable intermediate nodes to efficiently determine a subsequent node to forward the data packet to based on the transmission requirement. For example, the obtaining of the information about the transmission requirements comprises reading the information from the data packet or receiving the information from a route control node. Examples may enable an efficient mechanism to inform intermediate nodes how/where to forward a data packet.

Another example is a computer program having a program code for performing one of the methods described herein, when the computer program is executed on a computer, a processor, or a programmable hardware component.

Yet another example is an apparatus for a communication system. The apparatus comprises one or more interfaces configured to communicate in the communication system and one or more processing devices configured to perform one of the methods described herein. Further examples are network nodes, e.g. a user device, an application server, or a routing node, comprising an example of the apparatus. A communication network with such an apparatus is another example.

### Brief description of the Figures

Some examples of apparatuses and/or methods will be described in the following by way of example only, and with reference to the accompanying figures, in which
Fig. 1 shows a block diagram of a method for route control and for determining a route for a data packet to be transmitted from a first node to a second node in a communication network;
Fig. 2a depicts a block diagram of a method for a first network node to determine a route for a data packet to be transmitted from the first node to a second node in a communication network;
Fig. 2b depicts a block diagram of a method for route control at an intermediate node and for determining a route for a data packet to be transmitted from a first node to a second node in a communication network;
Fig. 3 illustrates a block diagram of an apparatus for a communication system;
Fig. 4 shows a holistic overview of a communication network in an example;
Fig. 5 depicts an example of a route in a network;
Fig. 6 illustrates rerouting in the network of Fig. 5 upon node failure;
Fig. 7 shows an example of a protocol header;
Fig. 8 depicts an example of a communication network;
Fig. 9 illustrates end-to-end route determination in an example;
Fig. 10 shows another example network with end-to-end routing; and
Fig. 11 depicts a holistic view of an example network with end-to-end routing.

### Detailed Description

Some examples are now described in more detail with reference to the enclosed figures. However, other possible examples are not limited to the features of these examples described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

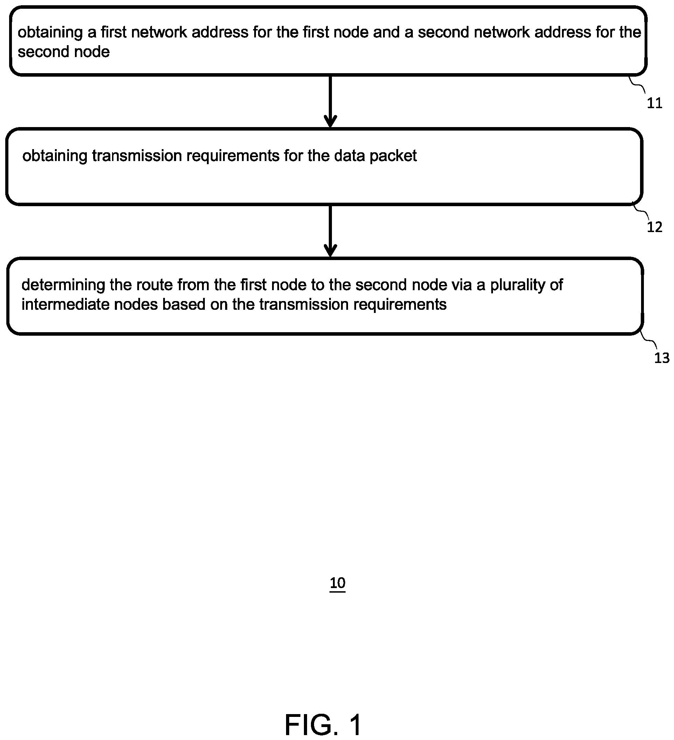

Fig. 1 shows a block diagram of a method 10 for route control and for determining a route for a data packet to be transmitted from a first node to a second node in a communication network. The method 10 comprises obtaining 11 a first network address for the first node and a second network address for the second node. The method further comprises obtaining 12 transmission requirements for the data packet. The method also includes determining 13 the (end-to-end) route from the first node to the second node via a plurality of intermediate nodes based on the transmission requirements.

In general, a communication or telecommunication system or network refers to a complex network of devices, technologies, and protocols designed to enable the transmission of information over distances. This system facilitates the exchange of data, voice, video, and other forms of communication between users, typically through wired or wireless means. Key components of a telecommunication system include transmission media (like fiber optics or radio waves), switching and routing devices (such as routers and base stations), and end-user devices (like smartphones, computers, and servers). The system operates through various layers of protocols that ensure reliable, secure, and efficient communication, whether for personal, business, or governmental use. These systems are integral to modern society, supporting services such as mobile communication, internet access, satellite transmission, and broadcasting, enabling global connectivity and access to information.

A network node in a telecommunication system or network refers to any active, physical or logical device that is responsible for creating, receiving, or transmitting data within a network. These nodes serve as critical points of communication and data transfer, enabling the flow of information across the network. Examples of network nodes include routers, switches, base stations, servers, and user devices like smartphones and computers. Each node plays a specific role, such as directing data traffic, managing network connections, or handling user requests. In a telecommunications system, network nodes are interconnected, often forming a complex mesh that allows for efficient, scalable communication between multiple devices. These nodes can operate on different layers of the OSI (Open Systems Interconnection) model, from physical infrastructure to application services, and are essential for maintaining the integrity, speed, and reliability of communication networks.

A mobile communication system is a type of telecommunication infrastructure that allows users to transmit voice, data, and multimedia services wirelessly while on the move. This system operates through a network of interconnected components, including mobile devices (like smartphones and tablets), base stations (NodeBs, eNodeBs, gNodeBs), and core network elements, facilitating seamless communication across wide geographic areas. Mobile communication systems use radio frequencies to establish connections between mobile devices and base stations, which in turn connect to the broader public or private networks, such as the internet or telephony systems. Modern mobile communication systems are based on technologies like 4G (Generation)-LTE (Long Term Evolution) and 5G, which provide high-speed data transfer, low latency, and improved connectivity. These systems enable various services, including voice calls, text messaging, video streaming, and internet access, making them integral to personal, commercial, and industrial communication in today's interconnected world.

The transport infrastructure of today's data networks, including the internet, is installed at fixed locations. Routers, switches, servers, and entire data centers are housed in buildings or permanently installed outdoor cabinets and interconnected by network links, mainly based on optical fibers. Hence, the network topology formed by these nodes and the interconnecting fibers is also static. Changes in the topology occur only as a result of administrative actions, such as powering down interfaces, nodes, or entire sites, or due to errors caused by external influences such as flooding, fiber cuts by civil works, or power outages. To handle the impact of administrative changes and incidents on the network topology, long-proven routing protocols are implemented, which propagate local state changes across the network so each node can calculate an updated version of its routing table, reflecting the new topology and forwarding traffic according to the new situation. Such routing protocols, e.g., RIP (Routing Information Protocol), OSPF (Open Shortest Path First), ISIS (Intermediate System to Intermediate System), BGP (Border Gateway Protocol), have been in use for decades.

If topology changes occur in today's networks during nominal operations, such as in the case of mobile user equipment camped on mobile networks, dedicated protocol stacks and related control functionality are employed to abstract the movement from the transport infrastructure (see 3GPP's (3rd Generation Partnership Project) GPRS (General Packet Radio Services) tunneling protocol for further reference).

Communication networks may make use of a wider variety of physical platforms on which the network functionality is hosted and will integrate different environments. These platforms include satellites, drones, ships, airplanes, and land vehicles. Current satellites are deployed in ever-growing large-scale constellations and are already equipped with technology for inter-satellite links (ISL). With the integration of these satellite constellations into the global communication infrastructure, future transport networks will include network nodes hosted on satellites and forwarding paths over satellite links. With drones and other aerial platforms being mass-produced and used in a growing variety of use cases, transport network topologies will also include nodes and links hosted on aerial platforms. Network nodes can also be expected to be hosted on cars, making use of satellite uplinks and spawning local networks in and around the car, on ships, airplanes, and trains. Such networks, comprising classical terrestrial nodes as well as aerial, spaceborne, mobile terrestrial, and maritime platform-hosted nodes, are called 3D (three-dimensional) networks.

In contrast to classical network topologies as described above, 3D network topologies are not static but dynamic. The movement of satellites causes frequent topology changes. Spaceborne and aerial platforms can only connect to ground stations if they are in line of sight to the ground station. Inter-satellite links can only be maintained when a certain angular speed between the satellites is not exceeded. In certain orbital constellations, i.e., Walker constellations with an inclination lower than 90°, satellite planes' trajectories cross each other, causing satellites on neighboring planes to swap places twice per circumnavigation. Network topologies integrating aerial, mobile land, or maritime platforms are further subject to the physical characteristics of such platforms. Due to their controllability, they can change positions relative to each other, move out of line of sight towards one another or stationary network nodes, and be impacted by atmospheric conditions such as rain or clouds, causing transmission disruption of optical and radio frequency links.

Herein a communication network may comprise a plurality of network nodes and subnet-works, such as terrestrial and non-terrestrial networks and networks using different access technologies. The task of determining a route through the network may hence involve selecting appropriate nodes for forwarding the data packet from the first network node to the second network node. For example, the first network node may be a user device, such as a terminal or smart phone, a laptop or personal computer, respectively.

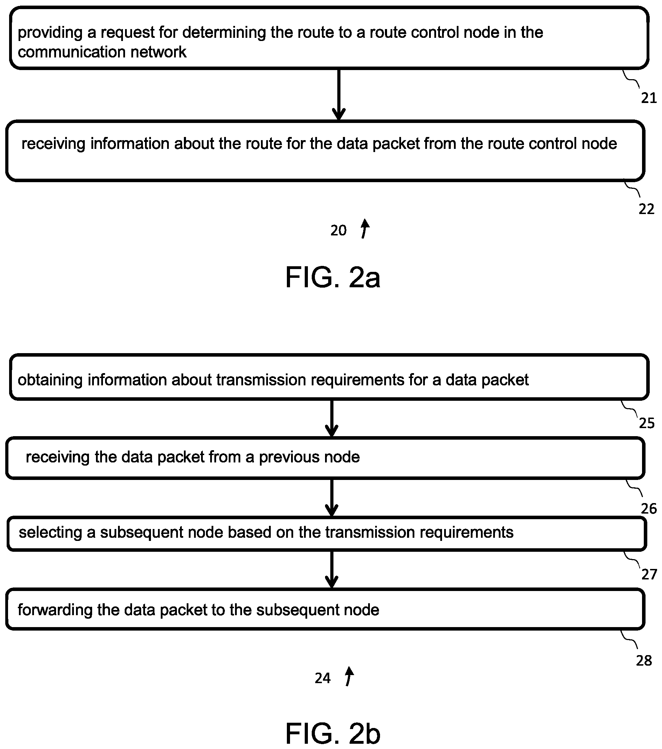

Fig. 2a depicts a block diagram of a method 20 for a first network node to determine a route for a data packet to be transmitted from the first node to a second node in a communication network. The method 20 comprises providing 21 a request for determining the route to a route control node in the communication network and receiving 22 information about the route for the data packet from the route control node. Hence, the first network node may transmit a routing request message to a routing node. At the routing node the above method 10 is performed, which may then further comprise receiving the routing request (message) from the first network node. For example, the transmission requirements may be determined from a user. The method 20 may then further comprise providing information about transmission requirements for the data packet to the route control node. This may, for example, be done using the route request message or using a separate message, which may comprise information indicating the routing requirements. As will be outlined in more details subsequently, the transmission requirements may comprise one or more elements of the group of QoS requirements (e.g. data rate, latency, error requirements), energy consumption requirements, one or more weights for weighting one or more predefined transmission requirements, and security requirements.

Fig. 2b depicts a block diagram of a method 24 for route control at an intermediate node and for determining a route for a data packet to be transmitted from a first node to a second node in a communication network. The method for the intermediate node comprises obtaining 25 information about transmission requirements for a data packet and receiving 26 the data packet from a previous node. The method 24 further comprises selecting 27 a subsequent node based on the transmission requirements and forwarding 28 the data packet to the subsequent node. Hence, at least in some examples the intermediate nodes along the route base their forwarding of a data packet of the transmission requirements as well. For example, the obtaining 25 of the information about the transmission requirements comprises reading the information from the data packet. Hence, as will be detailed subsequently information about the route or about transmission requirements can be inserted into a data packet, e.g. in a protocol header. Intermediate nodes, e.g. routers on the path or route, can then read such information and forward the data packet in line with it. Additionally or alternatively, a route control node, which determines the end-to-end route can inform nodes on the route about the forwarding of the data packet, i.e. about subsequent node they should forward the data packet to. The method 24 may then comprise receiving the information about the transmission requirements from a route control node.

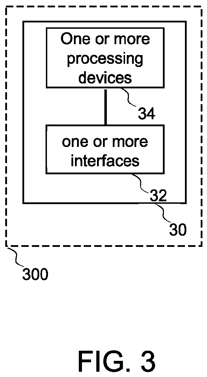

Fig. 3 illustrates a block diagram of an apparatus 30 for a communication network/system. The apparatus 30 comprises one or more interfaces 32 configured to communicate in the communication network. The one or more interfaces 32 are coupled to one or more processing devices 34. The one or more processing devices 34 are configured to perform one of the methods described herein. Further examples are a network node 300 comprising the apparatus 30. The network node 300 is shown in dotted lines in Fig. 3 as it is optional from the perspective of the apparatus 30.

In some examples, a network node 300 is a user terminal or device or an application server. However, the network node 300 can as well be a router or a switch, which performs several essential functions to ensure efficient data transmission and network connectivity. It forwards incoming data packets to their appropriate next-hop devices based on the destination addresses, using routing protocols like Routing Information Protocol (RIP), Open Shortest Path First (OSPF), and Border Gateway Protocol (BGP) to determine the best paths and maintain routing tables. Routers also employ Network Address Translation (NAT) to convert private IP (internet Protocol) addresses to public ones for internet access, enhancing security and conserving IP addresses. Additionally, routers can function as firewalls, filtering traffic according to security rules to block unauthorized access and prevent attacks. They manage network resources through Quality of Service (QoS) to prioritize critical applications, perform load balancing to distribute traffic across multiple paths, and control bandwidth allocation to prevent congestion. Routers can establish secure Virtual Private Networks (VPNs) using protocols like IPSec (Security Architecture for IP), Layer 2 Tunneling Protocol (L2TP), and Point-to-Point Tunneling Protocol (PPTP) for encrypted communication over public networks. Moreover, routers provide interfaces for network monitoring and management via web-based interfaces, command-line interfaces (CLI), or protocols such as SNMP (Simple Network Management Protocol), enabling administrators to configure settings and monitor traffic efficiently. These functions make routers vital for optimizing network performance, enhancing security, and ensuring reliable connectivity across diverse network environments.

As illustrated in Fig. 3 the respective one or more processing devices 34 are coupled to the one or more interfaces 32. The one or more interfaces 32 may correspond to one or more inputs and/or outputs for receiving and/or transmitting information, which may be in digital (bit) values according to a specified code or protocol, within a module, between modules or between modules of different entities. For example, an interface 32 may comprise interface circuitry configured to receive and/or transmit information. In examples an interface 32 may correspond to any means for obtaining, receiving, transmitting or providing analog or digital signals or information, e.g., any connector, contact, pin, register, input port, output port, conductor, lane, etc., which allows providing or obtaining a signal or information. An interface 32 may be configured to communicate (transmit, receive, or both) in a wireless or wireline manner and it may be configured to communicate, i.e., transmit and/or receive signals, information with further internal or external components. The one or more interfaces 32 may comprise optical interfaces, ethernet interfaces, serial interfaces and wireless interfaces and may comprise further components to enable communication in a mobile or fixed communication system or network, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

The one or more processing devices 34 may be implemented using one or more processing units, one or more circuitries, any means for processing, such as a processor, a computer or a programmable hardware component being operable with accordingly adapted software. In other words, the described function of the one or more processing devices 34 may as well be implemented in software, which is then executed on one or more programmable hardware components. Such hardware components may comprise a general-purpose processor, a Digital Signal Processor (DSP), a micro-controller, etc.

In some examples, network node 300 is a router or a switch installed on a satellite or a similar device moveable in space. For this example, it needs to communicate with other routers or switches inside the same domain and one or more gateways of the domain by using wireless interfaces including antennas and other elements.

Routing mechanisms are established technology while the transport of packets from a node into the next node is managed and proceeds based on a certain ruleset. This can be either fixed or flexible depending on technical aspects like existing load.

Example may go beyond this routing mechanisms by (combining):
- introducing new criteria for routing the traffic,
- considering the application inducing any transport of data packets in the network as part of the decision making about the routing, and
- defining a holistic view for an end-to end connection as base line for a routing,
- defining an instance which controls and steers the routing based on the enlarged/enhanced criteria.

Given the number of options to provide a routing among the different parts of a network for a specific connection-/ transmission request an example instance/apparatus is requested to check all the essential aspects in an end-to-end (e2e)-perspective and to provide a solution for a potentially perfect routing taking all essential parts and criteria into account.

This instance is on top of the existing structure, e.g. as some sort of route- or flow-master. It may contain a logic to combine several aspects to define a routing of data-packets in the network between the endpoints (first and second network nodes) of the requested connection. These aspects combine already existing rules for routing as defined by several existing routing algorithms but add additional aspects, such as:
- The type of application might need specific QoS parameters such as maximum latency, minimum throughput, specific security features. Different routing options might serve the application better than others,
- sustainability in particular energy consumption and its gaining from renewable sources is becoming increasingly relevant. Routing can be oriented based on energy availability and regaining capability from the nodes in the network, and
- Security or regulatory aspects may lead to considerations to keep the traffic in a specific network, IP-range etc.

The route may, at least in some examples, be indicated in the data packet. This may be achieved by inserting information about at least a subsection of the route into a protocol header of the data packet. For example, the indication may comprise a positive list of one or more network nodes to use for a transmission path and/or a negative list of one or more network nodes to avoid for the transmission path. Such a list may comprise individual nodes or subnetworks/network segments, e.g. by means of addresses or identifications. E.g. if a certain PLMN (Public Land Mobile Network) should be in- or excluded its identifier may be part of the list. A subnet or network segment may be in- or excluded by stating its address or common address range in a list. For example, network nodes of a certain country or region may be precluded using an identifier for said country or region, e.g. in terms of an address range.

The SRv6 (Segment Routing over IPv6) protocol is an advanced networking solution that leverages the IPv6 protocol to implement segment routing, enabling the encoding of routing instructions directly within the IPv6 packet header. By using the Segment Routing Header (SRH), SRv6 simplifies network operations by allowing source nodes to define a path for data packets without relying on per-flow state information on intermediate nodes. Each segment in the route is identified as a unique IPv6 address, representing specific instructions such as forwarding, processing, or service chaining. SRv6 enhances scalability, programmability, and flexibility in modern networks, supporting diverse use cases like traffic engineering, network slicing, and service chaining, while reducing reliance on traditional protocols like MPLS (Multiprotocol Label Switching).

To consider additional aspects in routing the SRv6 protocol shall be used as an example. SRv6 uses an IP packet header extension comprising the addresses of network nodes which are passed when routing an IP-packet to its destination. For the purpose of the mechanism in examples reported here, the SRv6 protocol may be extended to allow also the specification of "exclude nodes", which must not be passed on the way to the destination. Hence a sort of blacklist with nodes or subnetwork that must be avoided may be defined.

By using this extended version of SRv6 all identified nodes between start and endpoint of the data-transfer are taken in consideration when defining a route. Without any additional end user requirement on the route of the IP packet, which means additional info for routing in the header, routing takes place according to traditional routing mechanism. In case of additional instructions regarding specific demands for the route these are transferred into according information in the header by taking the according IP-addresses of the nodes either in a positive-list => to be passed or in a negative list => not to be passed.

The functions of the extended version of SRv6 are deployed on the application server and on the terminal device. On the application server side, the above method 10 may be performed and on the terminal device side the above method 20 may be performed. The above method 24 may be performed on intermediate node. The first node may be a user device and the method 20 further comprises obtaining information about transmission requirements from a user and applying the information about the transmission requirements to the route of the data packet. The method 10 at the routing node may then comprise providing information about the route to the first network node.

An application on the terminal device shall provide the option to the user to define specific requests for the routing to the target destination in this example: e.g. normal/secure access network, energy optimization, etc. The requests are forwarded from the terminal device to the application server.

On the application server such requests are handled by interpreting those according to an internal logic, e.g. secure access network means mainly satellite (if available) in particular in the access network at destination, energy optimization means as well satellite (if available) given the renewable energy on satellites by solar-panels. This can be combined with already given mechanisms in routing like the "Time-to-Live" mechanism, which usually drops IP-packets after passing a predefined number of nodes, but in this context can be used to enforce that an IP-packet cannot deviate from the shortest path to its destination node.)

For that purpose, a connection/transmission request will be sent to the application server, either without specific advice by the user or by additional requests of the user itself or by demands laid down in the software of the started application triggering any transport of IP-packets. This server has on-time information about the network with all components which can be used for providing the transmission. This includes the nodes in the access, backhaul and transport networks.

It furthermore contains an intelligent evaluation mechanism to capture all the previously mentioned aspects. For this it has an evaluation metric of the respective aspect such as for energy optimization available energy in the node, for cost for regaining, for security/regulatory aspects at the locations of nodes which could be used for routing etc. It furthermore contains benchmark figures for the application inducing the transport of packets in the route. Except of using just one aspect for defining the routing the instance does an overarching evaluation in taking all aspects into account.

For this, the instance will check one or more elements of:
- The general option to provide a connection between the endpoints for a specific transmission, e.g. terminal devices, server, etc.,
- The capabilities of the network to support a specific service which caused the connection-/transmission request, e.g. minimum benchmarks for maximum latency, minimum throughput to provide the service with the expected/defined Quality of Service (QoS),
- Given an installed logic on the server it can even calculate the energy consumption and CO2 emission for the requested transmission given the number of options in the e2e delivery chain to provide an optimized transmission recommendation,
- The installed logic on the server will consider regulatory constraints with regard to connectivity in specific parts in the network, in particular use of specific access, backhaul or satellite capacities of a specific provider or in a specific country or used technology (technology equipment or technology provided by specific vendors) in parts for the network,
- The installed logic on the server will look in general for security of the transmission following a ruleset which is derived from a number of aspects like general assessment of security of specific network types, compliance of network to security standards etc.,
- The installed logic on the server follows requests of the user when starting a connection-/ transmission regarding prioritization of one of the aspects mentioned before or even defining further rules which should be followed for creating a connection/routing in such a network providing several options for e2e-connectivity.

The information about the transmission requirements may comprise one or more weights for weighting one or more predefined transmission requirements. Moreover, the routing node, the method 10 respectively, may be configured to monitor a network topology and/or load situation of one or more communication systems.

All these aspects may be weighted with regard to the current situation in the network, the needs of the application, the achievable best values for all these aspects based on the applied metrics or weights. In combination a guidance for best routing based on the specific situation will be elaborated and initiated in the network.

To fulfill its task, in an example the instance will designed in a way to:
- Be able to directly react to a connection/transmission request in short notice and do the required calculations to keep immediate connectivity build up/service start in front of the customers,
- Have updated information about energy consumption and related CO2 emission levels of all nodes when used for dedicated transmission purpose,
- Have interfaces to regulatory bodies to get updated information about security threats in any parts of network caused by external influence or regulatory rules regarding use of local networks or networks of specific parties.

To handle all these requirements a powerful implementation, which could include AI (Artificial Intelligence) mechanisms, is available to handle the multitude of requests for connectivity/transmission in such a network and provides for each of those request a solution which best fits to the various requirements. Hence at least in some examples, a machine learning model may be used for determining the route. Such a machine learning model will be trained with data sets that assign routes for a given set of transmission requirements and network status (topology and load). Thereby the machine learning model, such as a neural network, can learn how routes or the networks nodes that make up a route are selected based on the network status and transmission requirements.

Mandatory requirements are fulfilled in any case while all other requirements are solved by the (Al-driven) inhering logic of the system to provide the best routing for the related connectivity-/ transmission-request. On top requests of the user by applying specific preferences on specific aspects can be handled by prioritizing those aspects against all other optional aspects when providing a solution.

In this way the application server with the extended SRv6 works as an instance to apply additional information for the routing. By either choosing IP-addresses of nodes which are satellites or by avoiding nodes which are seen critical regarding country code of the IP-range, or general as terrestrial nodes. Based on the request of user the application server defines the according IP-addresses in the header to ensure a routing meeting the user request.

With special regard to TN-NTN networks, all application servers, which shall work according to such a principle can operate an API to receive network node information from an according network, which displays all available node-IP addresses in that network. (Given the dynamic structure of such a network updates cycles have to be defined, in principle valid for terrestrial networks as well.)

Without limiting the general approach, a tangible example can be done in a more specific NTN context with different access options to establish mobile connectivity. This could already provide useful functions with a limited need for such efforts.

In this NTN context a set of four general options is assumed to provide mobile connectivity between two endpoints of a communication /data transfer:
1. The public terrestrial mobile network (PLMN, Public Land Mobile Network),
2. An airborne system such as a Low- or High-Altitude Platform on top of the local terrestrial mobile network,
3. A Satellite system with direct access for the device, and
4. The public terrestrial mobile network in another country (vPLMN, visitor PLMN) in case of an international connection mobile to mobile.

While 1) to 3) could be a national or international connections, 4) definitely represents an international connection.

For defining the most appropriate option the instance may apply a number of different criteria:
- Availability and current load, and
- Fit to service: Keeping minimum thresholds figures for QoS such as specific minimum throughput benchmarks or maximum latency benchmarks; both aspects could in particular opt out the satellite option.

These two figures are mainly technical driven and in principle apply today based on current deployments.

### Beyond that:

Regulator constraints can apply in international communications while either having a cost or a security aspect. In particular, if the endpoint of the communications is in a country/an area which is not compliant to certain standards, the routing can be adopted in a way that the access is not via a local fixed or mobile network but via e.g. a satellite network beyond the control of the local network operator and/or government.

This applies as well for specific security aspects with the avoidance of a local network and potential option for interception or disruption of connectivity with once again the choice of a specific local network as a preferred choice given this one provides higher security level or even once again the satellite network with direct access to the terminal device as best option.

Energy consumption and CO2 level: Given the previous technology options are still available, sustainability can be a major argument for a specific routing. The example instance includes for that purpose a calculation scheme for the energy consumption and CO2 emission based on different routing and will apply the one with lowest power and CO2 level. In the particular NTN-case, it might even be the case that the solar powered satellites or High Altitude Platforms (HAPs) will support the routing via satellite network since energy is fully renewable at low operational cost, which leads to a higher value/weight of this specific aspect in the calculation for the optimal routing (optimal in the sense of the transmission requirements). Further criteria can be applied as well.

Without further guidance the instance shall work based on a highly sophisticated logic, which assess the incoming connection-/ transmission request. The example instance considers the different aspects and applies a suited choice for the best network access, which results furthermore in a related choice of the transport network.

On top, based on an interface the user can shift weights between the different aspects/criteria by defining one with highest priority, e.g. such a security. The instance will shift accordingly the calculation for the best access option and provide an according choice without neglecting all other criteria, which still apply but with less weight in the decision making.

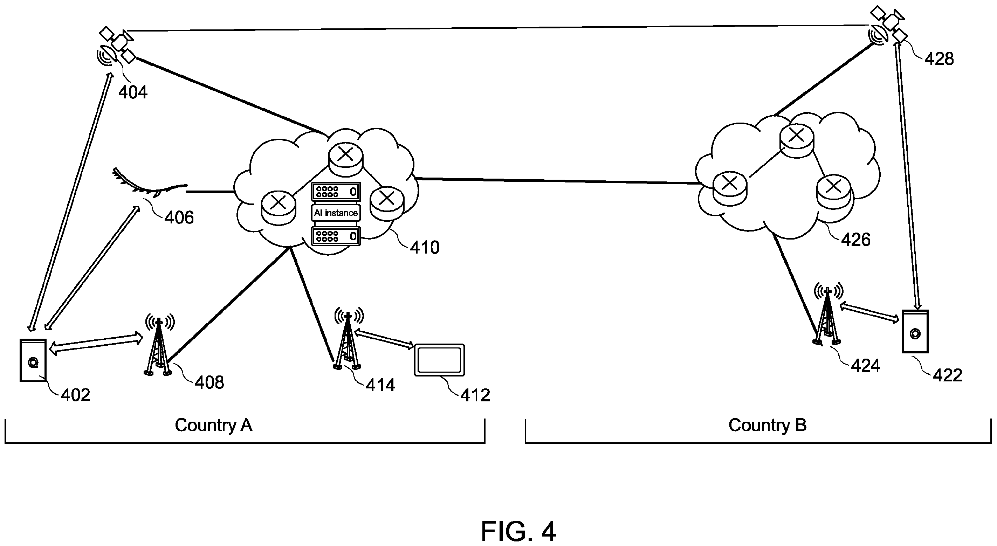

Fig. 4 shows a holistic overview of a communication network in an example. Fig. 4 illustrates a communication system of country A on the lefthand side. User terminal 402 has different access options: Via satellite 404, via the High-Altitude platform 406 or via base station 408. All three access nodes 404, 406, 408 connect to the backbone network 410 of country A, which is illustrated as cloud network with a plurality of internal nodes such as servers, routers, etc. Another user terminal 412 only has a single access option, which is via base station 414. As further shown in Fig. 4 on the righthand side, in another country B there is another user terminal 422 having access via base station 424 or via satellite 428 to country B's backbone network 426, also comprising a plurality of internal network nodes. Moreover, it is assumed that the backbone networks 410 and 426 have gateways so they can communicate directly with each other, via the satellites 404, 428, respectively. The scenario in Fig. 4 shows that if user 402 wants to communicate with user 422, there are several routing options. One option is via the satellites 404, 428 and another option is via the backbones 410, 426, which may be accessed via base station 408, 424, via the platform 406 or via the satellites 404, 428. Of course, combinations thereof are also conceivable. For example, if transmission requirements indicate that the backbone 426 of country B should be avoided, e.g. for security reasons, then a route via the satellites 404 and 428 can be selected. If low latency is the transmission requirement, then a route via the base station 408, 424 and backbones 410 and 426 may be selected.

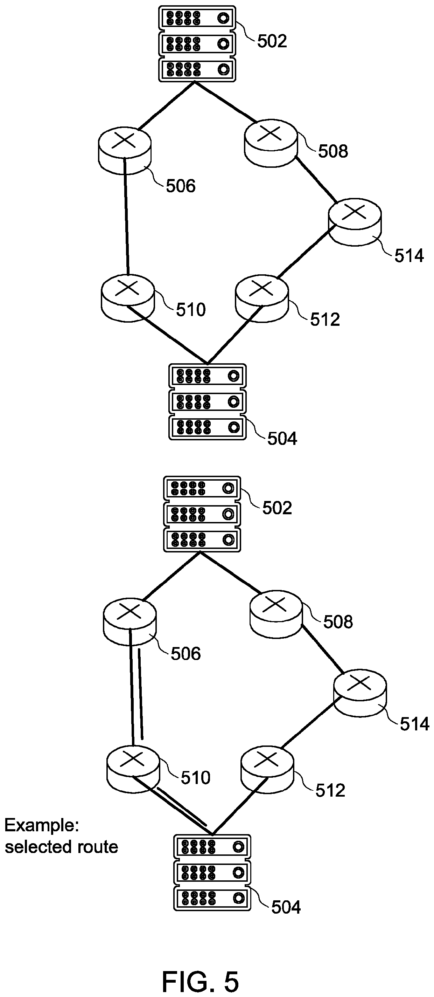

In the following the principle of routing will be further detailed. Fig. 5 depicts an example of a route in a network. At the top, Fig. 5 shows two end points 502, 504, which may be a user terminal 502 and an application server 504. In between there is a network with multiple nodes, e.g. routers 506, 508, 510, 512, and 514. Based on defined criteria and via software implemented algorithms a route can be determined. Each node knows the nodes, which it is connected to and able to send data-packages. For example, a node knows the IP-Addresses of the connected nodes, e.g. node 514 would know that it has direct connection to nodes 508 and 512. Once a data-packet arrives with a certain destination the initial node checks the destination address of the data packet and checks connected nodes which could be used to forward the data package further to its destination. Once the next nodes are determined these nodes check the next nodes on the way. If in combination of the nodes a route seems longer than an alternative it is de-prioritized against other routes. When reaching the destination point/node the most efficient way for the data package is defined and the packet is forwarded accordingly. In the example this situation in shown in Fig. 5 at the bottom., where the route is selected via points 502, 506, 510, 504. In this calculation a major aspect for decision making is run/transport time, which includes the number of nodes and the congestion of the network. As shown in Fig. 5 the alternative route via nodes 508, 514, 512 involves one node more.

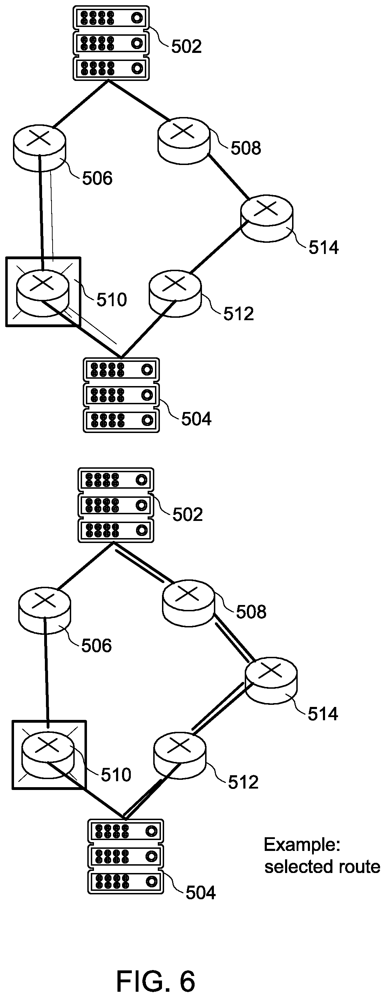

Fig. 6 illustrates rerouting in the network of Fig. 5 upon node failure. Fig. 6 shows the route of Fig. 5 at the top. Network node 510 fails and the route is no longer valid. Therefore, the alternative route via nodes 508, 514 and 512 is selected. Examples may enable a flexible intelligent routing . While today the nodes are treated equally a change can be introduced by defining additional criteria in terms of transmission requirements for selecting the next hop based not only for transport reasons. For example, SW-implementation in the nodes may be configured to read the header of incoming data-packets and apply more than the given routing decision based on information in this header of the data packet.

For whatever reason the data packet shall not be routed through nodes allocated in a specific network or country. The header of the data packet incudes an information about IP-ranges, which are not allowed for routing. The nodes notice this message and apply these requirements for selecting the next possible node, cf. the above method 24. As a result, nodes within the named IP-range are not recognized/selected as potential way anymore, the data packages are routed on a different way to the destination accordingly.

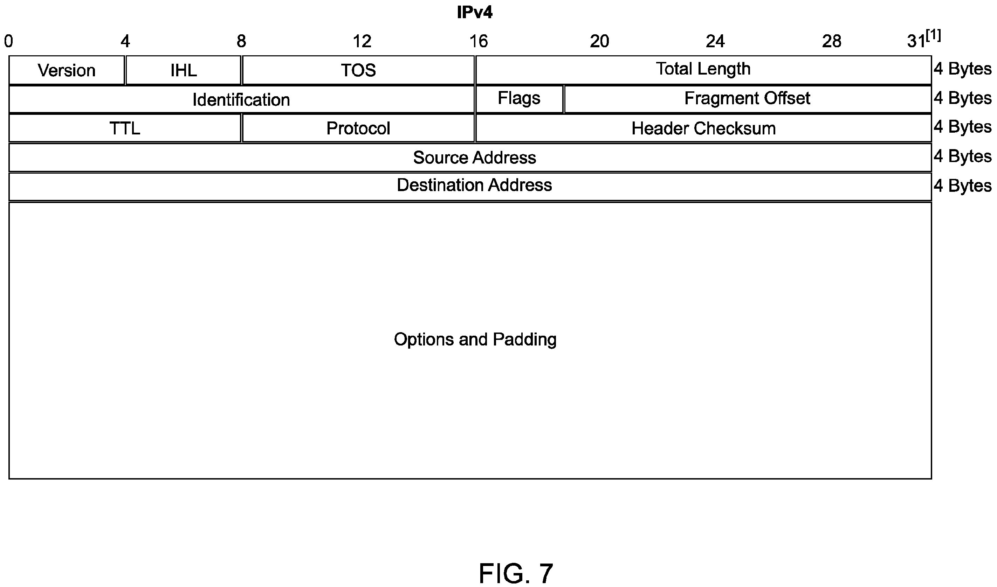

Fig. 7 shows an example of a protocol header. In this example an IPv4 header format is selected. The header comprises the version field, Internet Header Length (IHL), Type of Service (TOS), Total Length in bytes, Identification, Flags, Fragment Offset, Time To Live (TTL), Protocol, Header Checksum, Source Address and Destination Address. Based on existing standards additional info can be inserted in the header of data packets. The "Options and Padding"-field offers room for an optional 40 Bytes.

The approach for flexible intelligent routing in an example may use a definition of an inadequate routing path:
8 bits for selection of service request (here routing path selection):
1 bit for indicator active/not active, 4 bits for indicating numbers 0-9, >100 bit are available to indicate not allowed IP address spaces for routing.

Alternatively, preferred routing via satellite network may be configured:
8 bits for selection of service request (here satellite network routing):
1 bit for indicator active/not active, 4 bits for indicating numbers 0-9, >100 bit available to indicate routing point of gateway into satellite network.

Given that a device is connected via a telecommunications network (=> usual procedures) an application on the device may start a communication request (=> usual procedures in the network). In interaction with the application server the framework for the data communication will be defined via the procedures in the application server and the application on the device. By that the application defines if additional aspects shall be considered when forwarding the data-packets through the network. In case those shall be applied:
The software in the application on terminal and server is capable to write those data into the header of the data-packets and the routing will follow accordingly.

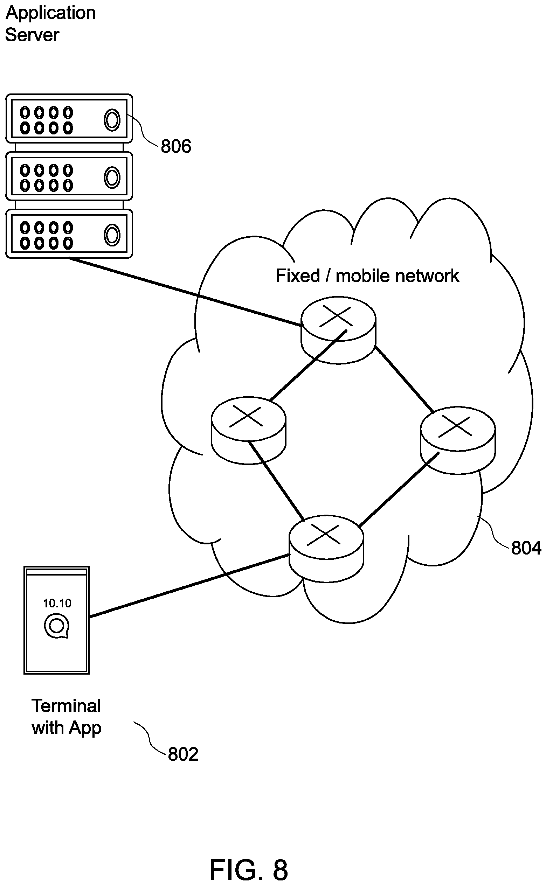

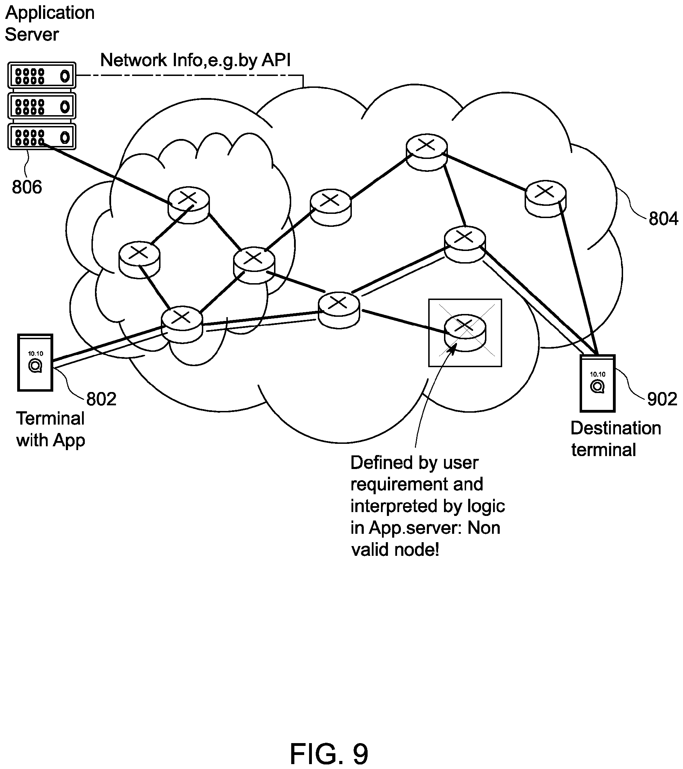

Fig. 8 depicts an example of a communication network with a terminal 802, a network cloud 804, and an application server 806. After start of the application on the device 802, the type of communication via the application is defined. Moreover, transmission requirements are defined for routing via the application, e.g. a user or the application sets or may have set the requirements. The server 806 may apply an extended SRv6 protocol and additional logic is implemented on server 806 to transfer requirements into specific routing via available nodes 804. The IP-addresses are allocated for the required path via the nodes 804 and transferred into the header of IP-packets. The transport of data according to requirements can take place as shown in Fig. 9. Fig. 9 illustrates end-to-end route determination in an example. Fig. 9 shows end-to-end routing as set by the application server 806 from terminal 802 to destination terminal 902. As also indicated in Fig. 9 there is one node 904, which shall be avoided per user setting. It is defined by the user requirement and by the logic in the application server as a non-valid node. This information is present in the modified header of the data packet and considered by the forwarding node in the cloud 804.

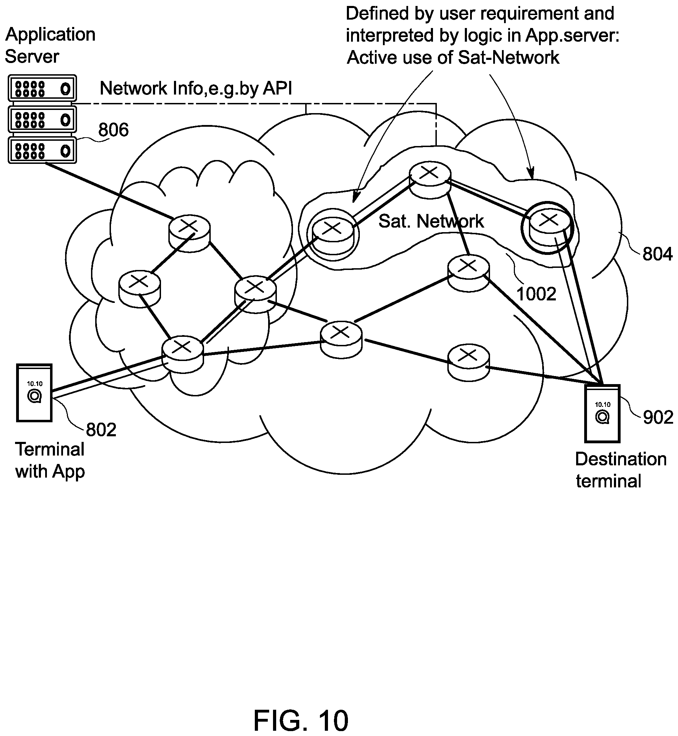

Fig. 10 shows another example network with end-to-end routing. Fig. 10 shows basically the same scenario as Fig. 9, but the backbone cloud 804 further comprises a satellite network 1002. In this example the user defined per user requirement that the satellite network should be used. Hence the route includes the satellite network 1002.

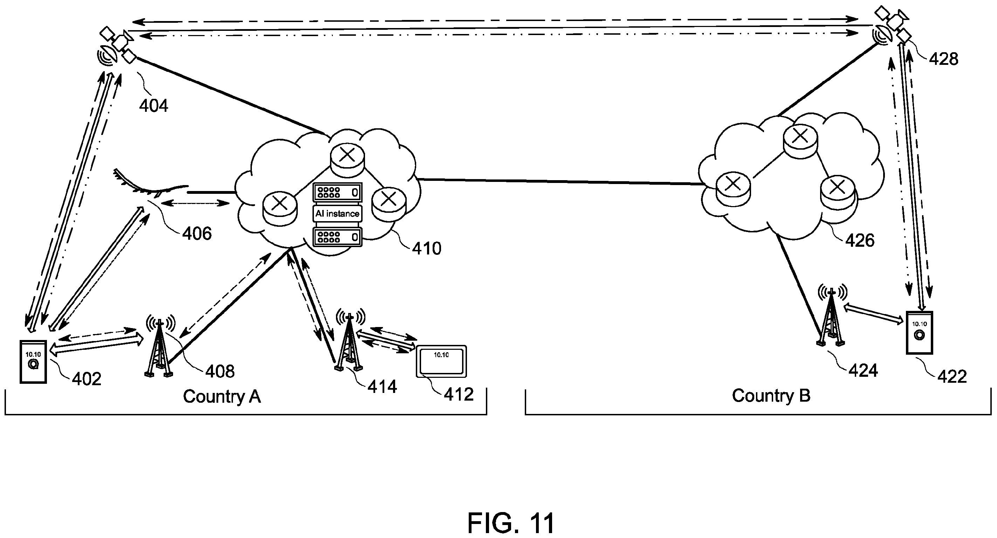

Fig. 11 depicts shows a holistic view of an example network with end-to-end routing. Fig. 11 shows the same network components as Fig. 4, i.e. interconnected subnetwork of countries A and B. Fig. 11 further shows routes that have been determined based on different transmission requirements. In Fig.11 there are three user terminals 402, 412 and 422. It is assumed that user terminal 402 has three access options in country A via satellite 404, via a platform 406, or via base station 408. User terminal 412 in country A only has an access option via base station 414 and user terminal 422 has two access options in country B via base station 424 and via satellite 428. The access options are indicated in Fig. 11 using thicker arrows. For example, a route from terminal 402 to terminal 412 determined for maximum throughput and minimum latency starts at terminal 402 and routes via base station 408 to the backbone 410 and via base station 414 to terminal 412. Another example is a route that is determined based on maximum throughput in an assumed grey spot (a spot not covered by the terrestrial base stations), which runs from terminal 402 via platform 406 to the backbone 410 and via base station 414 to terminal 412 Yet another example is a route, which provides maximum international security and which therefore runs across the satellites only, i.e. it starts at terminal 402 and routes via satellites 404 and 428 to terminal 422. Moreover, this route could also be the one with the best CO2 footprint (satellites 404 and 428 use fully renewable energy from solar panels).

Summarizing examples, a decentralized structure may be established using the initial interaction between a terminal device and an application server. The mechanisms for the extended addressing header structure of the IP packets may be installed at the application server and can then affect the respective routing. This mechanism may be initialized via a user request with the options provided by the user application. The application may communicate to the network layer where to route the packet to and/or if there are special transmission requirements with respect to security, energy consumption, etc., which shall be taken into account for routing. The routing may then take place in the network layer, however, based on the transmission requirements. Other examples may use a fully centralized routing. The application server, which executes the respective functions, may then communicate with another centralized routing node in case it does not have full capabilities to obtain the routing parameters with respect to a current network situation. Furthermore, a provider of the application may provide the respective options for the transmission requirements and makes them available to the application server together with any additional information that may be necessary to enable route determination based on the transmission requirements. Network information may be obtained using mechanisms that collect such information, e.g. as also used for SRv6. Such Information exchange could also be realized using an Application Programming Interface (API) that is offered by network operators, which may be useful, particularly, when deciding whether or not to route through a satellite network.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (10) for route control and for determining a route for a data packet to be transmitted from a first node to a second node in a communication network, the method (10) comprising
obtaining (11) a first network address for the first node and a second network address for the second node;
obtaining (12) transmission requirements for the data packet; and
determining (13) the route from the first node to the second node via a plurality of intermediate nodes based on the transmission requirements.

2. The method (10) of claim 1, further comprising receiving a routing request from the first network node and/or obtaining the transmission requirements from a user.

3. The method (10) of claim 1, wherein the transmission requirements comprise one or more elements of the group of Quality-of-Service, QoS, requirements, energy consumption requirements, one or more weights for weighting one or more predefined transmission requirements, and security requirements.

4. The method (10) of one of the claims 1 to 3, further comprising providing information about the route to the first network node.

5. The method (10) of one of the claims 1 to 4, further comprising monitoring a network topology and/or load situation of one or more communication systems, and/or using a machine learning model for determining the route.

6. The method (10) of one of the claims 1 to 5, being configured at an application server.

7. A method (20) for a first network node to determine a route for a data packet to be transmitted from the first node to a second node in a communication network, the method comprising
providing (21) a request for determining the route to a route control node in the communication network; and
receiving (22) information about the route for the data packet from the route control node.

8. The method (20) of claim 7, further comprising providing information about transmission requirements for the data packet to the route control node and/or wherein the information about the transmission requirements comprises one or more weights for weighting one or more predefined transmission requirements.

9. The method (20) of one of the claims 7 or 8, further comprising indicating the route in the data packet.

10. The method (20) of claim 9, further comprising inserting information about at least a subsection of the route into a protocol header of the data packet and/or wherein the indicating comprises a positive list of one or more network nodes to use for a transmission path and/or a negative list of one or more network nodes to avoid for the transmission path.

11. The method (20) of one of the claims 7 to 10, wherein the first node is a user device and wherein the method further comprises
obtaining information about transmission requirements from a user; and
applying the information about the transmission requirements to the route of the data packet.

12. A method (24) for route control at an intermediate node and for determining a route for a data packet to be transmitted from a first node to a second node in a communication network, the method comprising
obtaining (25) information about transmission requirements for a data packet;
receiving (26) the data packet from a previous node; and
selecting (27) a subsequent node based on the transmission requirements; and
forwarding (28) the data packet to the subsequent node.

13. The method (24) of claim 12, wherein the obtaining of the information about the transmission requirements comprises reading the information from the data packet or receiving the information from a route control node.

14. A computer program having a program code for performing one of the methods (10; 20; 24) of one of the claims 1 to 13, when the computer program is executed on a computer, a processor, or a programmable hardware component.

15. An apparatus (30) for a communication network, the apparatus (30) comprising one or more interfaces (32) configured to communicate in the communication network; and one or more processing devices (34) configured to perform one of the methods of one of the claims 1 to 13.

## Amended claims

### Amended claims in accordance with Rule 137(2) EPC.

1. A method (10) for route control at a route control node and for determining a route for a data packet to be transmitted from a first node to a second node in a communication network, the method (10) comprising
obtaining (11) a first network address for the first node and a second network address for the second node;
obtaining (12) transmission requirements for the data packet; and
determining (13) the route from the first node to the second node via a plurality of intermediate nodes based on the transmission requirements, wherein the transmission requirements comprise one or more elements of the group of energy consumption requirements, one or more weights for weighting one or more predefined transmission requirements, and security requirements.

2. The method (10) of claim 1, further comprising receiving a routing request from the first network node and/or obtaining the transmission requirements from a user.

3. The method (10) of claim 1, wherein the transmission requirements further comprise Quality-of-Service, QoS, requirements.

4. The method (10) of one of the claims 1 to 3, further comprising providing information about the route to the first network node.

5. The method (10) of one of the claims 1 to 4, further comprising monitoring a network topology and/or load situation of one or more communication systems, and/or using a machine learning model for determining the route.

6. The method (10) of one of the claims 1 to 5, being configured at an application server.

7. A method (20) for a first network node to determine a route for a data packet to be transmitted from the first node to a second node in a communication network, the method comprising
providing (21) a request for determining the route to a route control node in the communication network; and
receiving (22) information about the route for the data packet from the route control node, the method (20) further comprising providing information about transmission requirements for the data packet to the route control node, wherein the transmission requirements comprise one or more elements of the group of energy consumption requirements, one or more weights for weighting one or more predefined transmission requirements, and security requirements.

8. The method (20) of claim 7, wherein the information about the transmission requirements comprises one or more weights for weighting one or more predefined transmission requirements.

9. The method (20) of one of the claims 7 or 8, further comprising indicating the route in the data packet.

10. The method (20) of claim 9, further comprising inserting information about at least a subsection of the route into a protocol header of the data packet and/or wherein the indicating comprises a positive list of one or more network nodes to use for a transmission path and/or a negative list of one or more network nodes to avoid for the transmission path.

11. The method (20) of one of the claims 7 to 10, wherein the first node is a user device and wherein the method further comprises
obtaining information about transmission requirements from a user; and
applying the information about the transmission requirements to the route of the data packet.

12. A method (24) for route control at an intermediate node and for determining a route for a data packet to be transmitted from a first node to a second node in a communication network, the method comprising
obtaining (25) information about transmission requirements for a data packet, wherein the transmission requirements comprise one or more elements of the group of energy consumption requirements, one or more weights for weighting one or more predefined transmission requirements, and security requirements;
receiving (26) the data packet from a previous node; and
selecting (27) a subsequent node based on the transmission requirements; and
forwarding (28) the data packet to the subsequent node.

13. The method (24) of claim 12, wherein the obtaining of the information about the transmission requirements comprises reading the information from the data packet or receiving the information from a route control node.

14. A computer program having a program code for performing one of the methods (10; 20; 24) of one of the claims 1 to 13, when the computer program is executed on a computer, a processor, or a programmable hardware component.

15. An apparatus (30) for a communication network, the apparatus (30) comprising one or more interfaces (32) configured to communicate in the communication network; and one or more processing devices (34) configured to perform one of the methods of one of the claims 1 to 13.
